# EUROPÄISCHE PATENTSCHRIFT

(11) **EP 3 430 601 B1**
(45) Veröffentlichungstag und Bekanntmachung des Hinweises auf die Patenterteilung: **22.04.2020**
(21) Anmeldenummer: 17716781.4
(22) Anmeldetag: 14.03.2017
(51) Int. Cl.: G07F 17/42, B25J 1/04, B25B 9/00, B25B 9/04

(54) **VORRICHTUNG ZUM ENTNEHMEN UND WIEDEREINFÜHREN VON PARKKARTEN UND PARKSCHEINEN AUS DEN BZW. IN DIE DAFÜR VORGESEHENEN AUTOMATEN**
DEVICE FOR REMOVING AND REINTRODUCING PARKING TICKETS AND PARKING VOUCHERS FROM AND INTO THE AUTOMATIC MACHINES PROVIDED FOR THEM
DISPOSITIF POUR PRÉLEVER DES CARTES DE STATIONNEMENT ET DES TICKETS DE STATIONNEMENT DANS DES DISTRIBUTEURS AUTOMATIQUES PRÉVUS À CET EFFET ET/OU LES RÉINTRODUIRE DANS LESDITS DISTRIBUTEURS AUTOMATIQUES

(30) Priorität: 18.03.2016 DE 102016003348; 02.09.2016 DE 102016010927
(43) Veröffentlichungstag der Anmeldung: 23.01.2019
(73) Patentinhaber: Heinz Beck Kunststoffverarbeitung GmbH, 94113 Tiefenbach (DE)
(72) Erfinder: BECK, Heinz, 94113 Tiefenbach (DE)
(74) Vertreter: Gustorf, Gerhard
(86) Internationale Anmeldenummer: PCT/DE2017/100205
(87) Internationale Veröffentlichungsnummer: WO 2017/157389

(56) Entgegenhaltungen:
- DE-A1- 19 833 120
- GB-A- 1 305 733

## Beschreibung

Die Erfindung betrifft eine Vorrichtung, die das Entnehmen und Wiedereinführen von Parkkarten und Parkscheinen aus den bzw. in die dafür vorgesehenen Automaten aus einem Fahrzeug heraus erleichtert.

Bei Parkhäusern oder Parkflächen, die mit einer Schranke und einem diese betätigenden Automaten versehen sind, tritt sehr oft das Problem auf, dass beim Einfahren und beim Ausfahren der Abstand zwischen Fahrzeug und Automat zu groß ist, um diesen aus dem geöffneten Seitenfenster heraus mit dem Arm erreichen zu können. Der Fahrzeugführer ist daher gezwungen, entweder zu rangieren und näher an den Automaten heranzufahren oder aber die Fahrzeugtür zu öffnen und auszusteigen, um den Automaten bedienen zu können. Beides bereitet oftmals Probleme und stellt auch für nachfolgende Autofahrer ein Ärgernis dar, weil sich dadurch deren Wartezeit verlängert.

Es erscheint daher sinnvoll, ein Hilfsmittel vorzuschlagen, mit dem der Arm in gewisser Weise "verlängert" werden kann, um den Automaten vom Fahrzeug aus ohne Verrenkungen bedienen zu können.

Dieses sollte dabei so gestaltet sein, dass damit die üblicherweise in einer Ebene mit der Frontplatte des Automaten oder versenkt angeordnete Anforderungstaste für die Ausgabe der Parkkarte gedrückt werden kann.

Auch soll in jedem Fall gewährleistet sein, dass mit dem Hilfsmittel Parkkarten und Parkscheine unterschiedlicher Materialstärke aus dem Automaten entnommen und in diesen wiedereingeführt werden können. Bei dünnen Parkkarten und Parkscheinen besteht ansonsten die Gefahr, dass sie beim Versuch der Entnahme aus dem

Ausgabeschlitz gestaucht oder aber von der Greifvorrichtung gar nicht gefasst werden. Bei sehr dicken Karten kann es sein, dass sie nicht in den Schlitz des Hilfsmittels eingeführt werden können.

Weiterhin soll eine derartige Vorrichtung so gestaltet sein, dass selbst bei voll gestrecktem Arm das zielgenaue Aufschieben der Greifvorrichtung auf eine im Ausgabeschlitz des Automaten bereitgestellte Parkkarte ohne Probleme möglich wird.

So soll aus den bereits genannten Gründen der Widerstand bei der Aufnahme aus dem Ausgabefach des Automaten bzw. beim Einführen in den Schlitz der Hilfsvorrichtung möglichst gering sein.

Vor allem aber soll die Vorrichtung so gestaltet sein, dass bei der Entnahme der im Ausgabeschlitz des Automaten bereitgestellten Parkkarte von der Haltevorrichtung des Hilfsmittels eine ausreichend starke Haltekraft auf die Parkkarte einwirkt, damit diese zuverlässig erfasst und herausgezogen werden kann, auch wenn sie vom Ausgabemechanismus des Automaten mit einer stärkeren Kraft festgehalten wird.

Ebenso soll beim Wiedereinführen der Parkkarte vor der Ausfahrt die Haltekraft, mit der die Parkkarte von der Hilfsvorrichtung festgehalten wird, nicht zu massiv sein, da sie ansonsten vom Einzugsmechanismus des Automaten nicht erfasst werden kann bzw. nicht eingezogen wird.

Nicht zuletzt soll die Hilfsvorrichtung bei allen existierenden Automaten zum Einsatz kommen können.

Somit ergibt sich für die Gestaltung des Kopfteils einer derartigen Hilfsvorrichtung zusammenfassend folgendes Anforderungsprofil:
- Das Kopfteil soll so gestaltet sein, dass damit ein Drücken der Anforderungstaste des Automaten ohne Probleme möglich ist.
- Die Haltevorrichtung soll Parkkarten und Parkscheine unterschiedlicher Materialstärke aufnehmen können.
- Die Haltevorrichtung soll so gestaltet sein, dass damit je nach Bedarf mindestens zwei unterschiedlich starke Haltekräfte zum Fixieren der Parkkarte im Inneren des Kopfteils erzeugt werden:
   a) Eine starke Haltekraft zum sicheren Herausziehen der Parkkarte aus dem Ausgabeschlitz des Automaten mit Hilfe der Vorrichtung.
   b) Eine schwache Widerstandskraft beim Einschieben der Parkkarte sowohl in den Schlitz des Automaten als auch in den Schlitz der Vorrichtung.
   c) Eine schwache Haltekraft zum Herausziehen der Parkkarte aus dem Schlitz der Vorrichtung durch den Einzugsmechanismus des Automaten.

Zum Stand der Technik zählen Greifmittel zum Erfassen von Parkscheinen, um diese vom Fahrzeug aus in einen Automaten einführen oder aus diesem herausnehmen zu können. Ein Beispiel hierfür zeigt DE 20 2014 006 969 U1, das nach Art eines Storchschnabels ausgebildet ist und zwei gleich lange Hebelarme hat, die in ihrer Mitte gelenkig miteinander verbunden sind und an einem Ende ein zangenartiges Kopfteil zum Erfassen einer Parkkarte oder eines Parkscheines haben. Die Betätigung zum Öffnen und Schließen des zangenartigen Kopfteils erfolgt am anderen Ende der beiden Hebelarme und kann nur nach längerer Übung von einer Hand durchgeführt werden.

Eine Erleichterung in diesem Sinne bringt das ähnlich ausgebildete scherenartige Greifhilfsmittel gemäß DE 20 2013 004 097 U1, dessen längere, teleskopierbare Hebelarme am Ende Grifföffnungen haben, die jedoch bei auf volle Länge ausgezogenen Hebelarmen so weit voneinander beabstandet sind, dass sie nur mit Mühe von den Fingern einer Hand erfasst werden können.

Aus JP 10198833 A ist ein Greifarm mit einem Gehäuse bekannt, in dem in der Nähe seines offenen Endes ein Winkelhebel drehbar gelagert ist. Dieser hat einen kurzen Hebelarm und einen langen, als Greifschenkel wirkenden Hebelarm, der zum Erfassen eines Parkscheins durch eine auf den kurzen Hebelarm wirkende Feder gegen einen feststehenden Greifarm gedrückt wird. Für die Freigabe des Parkscheins dient ein Abzugsbügel, der über ein Seil mit dem kurzen Hebelarm verbunden ist. Aus DE 198 33 120 A1 und GB 1 305 733 A sind auch Vorrichtungen bekannt mit Klemmorganen, die automatisch unterschiedliche Haltekräfte ausüben können.

Schließlich zeigt DE 195 11 345 A1 einen Parkscheingreifer mit einem als Haltefeder ausgebildeten Greiforgan, das mittels eines Schiebers in einem Hohlarm axial verstellt werden muss, um mit seinem federnden Ende gegen das Greifende des Hohlarms gedrückt zu werden.

Aufgabe der vorliegenden Erfindung ist es deshalb, eine Vorrichtung anzugeben, mit der sowohl eine einfache Bedienung der Anforderungstaste des Automaten als auch das Entnehmen und Wiedereinführen von Parkkarten unterschiedlicher Materialstärke aus bzw. in Automaten möglich ist.

Die Lösung dieser Aufgabe erfolgt erfindungsgemäß durch die im Anspruch 1 angegebenen Merkmale.

Die Unteransprüche haben vorteilhafte Weiterbildungen der Erfindung zum Inhalt. Auch wenn in der nachfolgenden Beschreibung der Einfachheit halber lediglich von Parkkarten die Rede ist, sind damit auch Parkscheine zu verstehen.

Zur Lösung dieser Aufgabe ist vorgesehen, dass die Hilfsvorrichtung relativ schmal und klein gestaltet ist, so dass damit auch Anforderungstasten mit kleinem Durchmesser gedrückt werden können. Vorteilhafterweise weist diese zusätzlich an der Stirnseite des Kopfteils ein einen Vorsprung bildendes Element oder einen Drücker auf. Dieser Drücker kann entweder oberhalb oder unterhalb des Kopfteilschlitzes ausgebildet oder angeordnet sein. So kann dieser Drücker vorteilhafterweise als Kopfteilvorsprung ausgebildet sein, es kann jedoch auch ein zusätzliches Drückelement, beispielsweise ein Bolzen, am Kopfteil der Vorrichtung befestigt sein.
Ist die Stirnseite der Vorrichtung umfangmäßig kleiner gestaltet als die Fläche der Anforderungstaste des Automaten, kann letztere auch mit der gesamten Stirnseite gedrückt werden.

Ist die Stirnseite der Vorrichtung mit einem als Drücker in Form eines Vorsprungs ausgebildet, so überragt das freie Ende des Drückers die Stirnseite des Kopfteils nur ein Stück weit, da der Betätigungsweg einer Anforderungstaste ohnehin nur wenige Millimeter beträgt. Vorteilhafterweise ist dieser Drücker schräg nach oben oder unten weisend so angeordnet oder ausgebildet, so dass sich dadurch in Verbindung mit einer entsprechend gestalteten Stirnseite des gegenüberliegenden Bereichs des Kopfteils eine trichterförmig gestaltete Einführhilfe für die Parkkarte ergibt. Dadurch wird das zielgenaue Aufschieben auf eine im Ausgabeschlitz des Automaten bereitgestellte Parkkarte wesentlich erleichtert.

Der im Kopfteil der Vorrichtung angeordnete Schlitz ist so gestaltet, dass eine eingeführte Parkkarte in etwa bis zu einem Drittel bis maximal zu deren Hälfte aufgenommen wird. Der Schlitz selbst weist eine lichte Höhe von rund 2 bis 3 mm auf, wodurch in jedem Fall gewährleistet ist, dass auch Parkkarten mit größerer Materialstärke problemlos eingeführt werden können.

Zum Fixieren der eingeführten Parkkarte ist im Inneren des Kopfteils mindestens ein flexibles oder bewegliches Halteelement, z.B. eine Blattfeder angeordnet.

So ermöglicht es die besondere Gestaltung der Haltevorrichtung, dass beim Entnahmevorgang aus dem Automaten die Parkkarte ohne größeren Widerstand in den Schlitz des Kopfteils gleitet. Beim Wiedereinführen der Parkkarte in den Automaten vor der Ausfahrt wird ebenfalls nur eine geringe Klemmkraft auf die Parkkarte ausgeübt.

Erreicht wird dies dadurch, dass das Halteelement beim Kontakt mit der eingeführten Parkkarte nachgibt. Es wird auf den eingeführten Teil der Parkkarte durch das Halteelement lediglich so viel Anpressdruck ausgeübt, dass diese an der gegenüberliegenden Seite des Schlitzes anliegt und dadurch im Schlitz festgehalten wird.

Mit der erfindungsgemäßen Haltevorrichtung ist somit in jedem Fall gewährleistet, dass Parkkarten unterschiedlicher Materialstärke im Kopfteilschlitz mit nahezu gleicher Haltekraft fixiert werden.

Beim Herausziehen der Parkkarte aus dem Kopfteilschlitz erhöht sich die auf die Parkkarte einwirkende Anpresskraft auf selbsttätige Weise. Erreicht wird dies durch die Anordnung von Halteelementen, die die Eigenschaft aufweisen, in einer auf den Griff der Vorrichtung zuweisenden Richtung nachzugeben, während sie bei einer rückwärts gerichteten Bewegung eine reibungserhöhende Wirkung entfalten.

Schließlich wird eine stärkere Haltekraft notwendig, wenn mit der Vorrichtung eine im Ausgabeschlitz des Automaten nach deren Anforderung bereitgestellte Parkkarte entnommen werden soll.

So ist bei einer bevorzugten Ausführungsform im Kopfteil der Vorrichtung ein Klemmriegel so angeordnet, dass je nach Stellung des Kopfteils eine in dessen Schlitz eingeführte Parkkarte vom Klemmriegel beaufschlagt oder freigegeben wird. Dazu wird die Vorrichtung lediglich um 180° gedreht. Dabei wird - in einer Stellung, in der sich die Klemmriegelanordnung über dem Schlitz des Kopfteils befindet - die eingeführte Parkkarte durch den Klemmriegel fixiert, wobei ein im vorderen unteren Bereich angeordneter Ansatz auf die Oberseite der Parkkarte drückt. Die Haltekraft wird aufgrund der exzentrischen Lagerung des Klemmriegels durch die Ziehbewegung selbsttätig verstärkt und ist somit so stark, dass auch im Ausgabeschlitz des Automaten zur Entnahme bereitgestellte, jedoch mit einer relativ starken Festhaltekraft fixierte Parkkarten sicher entnommen werden können.

Durch geeignete Materialien des Klemmriegels oder dessen Oberfläche kann die Haltekraft der Vorrichtung weiter erhöht werden.

Bei einer weiteren, gleichfalls vorteilhaften Ausführungsform ist der untere Teil des Einführbereichs beim Kopfteil mit einer Reibfläche versehen. Hierfür geeignet ist vorteilhafterweise eine aufgebrachte Gummi- oder Schaumgummischicht. Es kann jedoch auch ein anderes reibungserhöhendes Material, beispielsweise ein Schmiergelpapierstreifen, angeordnet sein. Darüber hinaus ist es auch denkbar, die Oberfläche des Einführbereichs des Basisteils aufgeraut oder mit Rillen versehen zu gestalten.

Und nicht zuletzt wird durch die erhöhte Haltekraft beim Herausziehen der Parkkarte aus dem Ausgabeschlitz des Automaten bewirkt, dass es durchaus ausreichend ist, wenn die Parkkarte vom Kopfteil lediglich an einer Ecke erfasst wird, um sie sicher aus dem Ausgabeschlitz des Automaten entnehmen zu können.

Zusammenfassend lässt sich demnach feststellen, dass die erfindungsgemäße Vorrichtung insgesamt mindestens zwei Haltekraftstärken aufweist, die je nach Bedarf eingesetzt werden können:
- Eine geringfügige Widerstands- und Haltekraft beim Aufschieben des Kopfteils auf die im Ausgabeschlitz des Automaten bereitgestellte Parkkarte, beim Einführen der Parkkarte in das Kopfteil und bei der Kartenrückgabe in den Automaten beim Verlassen des Parkhauses,
- eine stark erhöhte Haltekraft beim Herausziehen der Parkkarte aus dem Ausgabeschlitz des Automaten.

Nachstehend wird die Erfindung anhand von Ausführungsbeispielen unter Bezug auf die Zeichnungen näher erläutert.

Es zeigen:
Fig. 1 das Kopfteil einer Vorrichtung mit in dessen Schlitz eingeführter Parkkarte beim Herausziehen der Parkkarte aus dem Ausgabeschlitz eines Automaten in Seitenansicht,
Fig. 2 das Kopfteil beim Heranführen an die im Ausgabeschlitz des Automaten zur Entnahme bereitgestellten Parkkarte,
Fig. 3 das Kopfteil beim Aufschieben auf die bereitgestellte Parkkarte,
Fig. 4 das Kopfteil nach einer Drehung um 180° beim Wiedereinführen der Parkkarte in den Einführschlitz des Automaten,
Fig. 5 eine teilweise geschnittene Seitenansicht der Vorrichtung mit in deren Kopfteil eingeführter Parkkarte, wobei die Vorrichtung in einer an Lüftungslamellen eines Pkw befestigten Halterung angeordnet ist,
Fig. 6 eine Variante des Kopfteils mit in den Schlitz eingeführter Parkkarte,
Fig. 7 eine Variante eines Kopfteils in Seitenansicht,
Fig. 8 eine weitere Varianten des Kopfteils in teilweise geschnittener Seitenansicht,
Fig. 9 die Variante der Fig. 8 mit einer anderen Stellung des Klemmriegels,
Fig. 10 eine Detailansicht des im Klemmriegel angeordneten Halteelements in einer Ausschnittvergrößerung,
Fig. 11 eine Variante der Fig. 10,
Fig. 12 eine weitere Variante des Kopfteils in Seitenansicht mit gestrichelter Darstellung von nicht sichtbaren Teilen und mit einem oberflächenbehandelten Klemmriegel,
Fig. 13 die Variante der Fig. 12 im Moment des Einführens einer Parkkarte in den Einführschlitz eines Automaten und
Fig. 14 die Variante der Fig. 13 beim gleichen Vorgang, jedoch mit einer alternativen Anwendung der Vorrichtung.

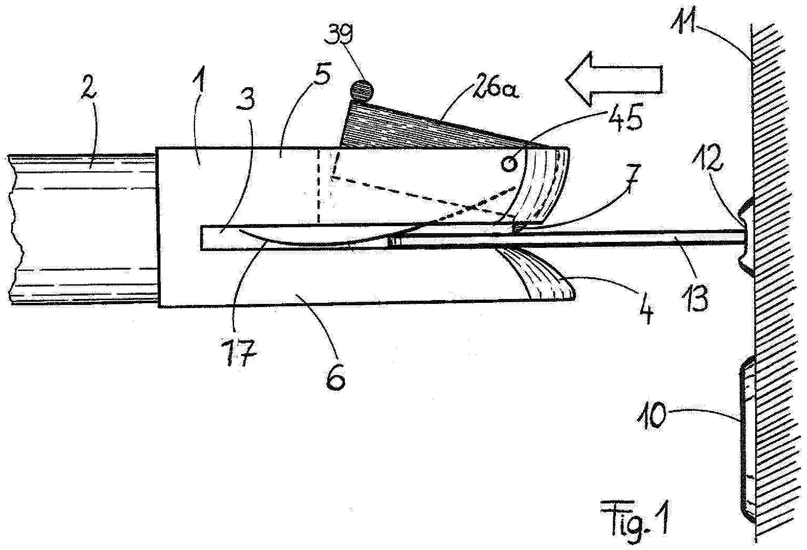

Die Vorrichtung gemäß der Erfindung hat ein im Wesentlichen quaderförmig gestaltetes Kopfteil 1 (vgl. Fig. 1), das an einer teleskopischen Griffstange 2 befestigt ist und in seinem Mittelteil einen Schlitz 3 zur Aufnahme einer Parkkarte 13 aufweist. Die lichte Höhe des Schlitzes 3 beträgt etwa 2 mm und somit rund das Doppelte der Materialdicke einer üblichen Parkkarte 13.

In Figur 1 ist die Vorrichtung im Moment des Herausziehens der im Ausgabeschlitz 12 eines Automaten 11 bereitgestellten Parkkarte 13 dargestellt. Die in den Schlitz 3 des Kopfteils 1 eingeführte Parkkarte 13 wird durch eine Blattfeder 17 festgeklemmt, die in der Deckplatte 5 des Kopfteils 1 verankert ist.

Fixiert wird die Parkkarte 13 innerhalb des Schlitzes 3 durch einen in der Deckplatte 5 angeordneten, zweiarmigen Klemmriegel 26a. Dieser ist innerhalb einer in der Deckplatte 5 vorgesehenen Aussparung um eine Exzenterachse 45 schwenkbar so angeordnet, dass er mit einem Teil seines längeren Hebelarmes die Oberseite der Deckplatte 5 überragt, sobald eine Parkkarte 13 in den Schlitz 3 eingeführt ist. In diesem Fall beaufschlagt der Klemmriegel 26a mit einem in seinem vorderen Bereich unten angeordneten, als Ansatz oder Nase ausgebildeten Halteelement 7 die Oberseite der Parkkarte 13.

Beim Herausziehen der Parkkarte 13 aus dem Automaten wird diese mittels des Klemmriegels 26a mit Halteelement 7 fixiert, wobei ihre Unterseite gegen die Unterseite des Schlitzes 3 gedrückt wird. Das Halteelement 7 des Klemmriegels 26a ist hier als Zapfen oder Keil ausgebildet. Es kann jedoch auch eine abgerundete Formgebung aufweisen oder in Form eines Halbzylinders gestaltet sein.

Das Halteelement 7 kann auch ein im Klemmriegel 26a eingesetztes Teil sein. Vorteilhafterweise besteht er aus einem den Reibungswiderstand erhöhenden Material, z.B. aus Gummi mit Schmirgelleinen.
Im gezeigten Beispiel ist die Parkkarte 13 nur ein Stück weit in den Schlitz 3 des Kopfteils 1 eingeführt. Es ist jedoch auch möglich, das Kopfteil 1 noch weiter auf eine im Ausgabeschlitz 12 des Automaten 11 bereitgestellte Parkkarte 13 aufzuschieben, wobei diese dann auch noch zusätzlich von der in den Schlitz 3 hineinragenden Blattfeder 17 beaufschlagt wird.
Durch die spezielle Formgebung des Klemmriegels 26a ist es möglich, unterschiedlich dicke Parkkarten 13 von 0,2 mm bis 1.0 mm sicher zu fixieren.
Die Stirnseite des Kopfteils 1 ist abgerundet und zugleich so gestaltet, dass sich eine trichterförmige Einführöffnung ergibt, wodurch das zielgenaue Aufschieben des Kopfteils 1 auf eine im Ausgabeschlitz 12 bereitgestellte Parkkarte 13 erleichtert wird. Dabei überragt die Vorderkante des Basisteils 6 des Kopfteils 1 die Vorderkante der Deckplatte 5 um einige Millimeter und dient somit als Drücker 4, mit dem die Anforderungstaste 10 des Automaten 11 betätigt werden kann.

Im hinteren oberen Bereich ist noch eine Noppe 39 angeordnet, die das Anheben des Klemmriegels 26a mit der Hand erleichtert.

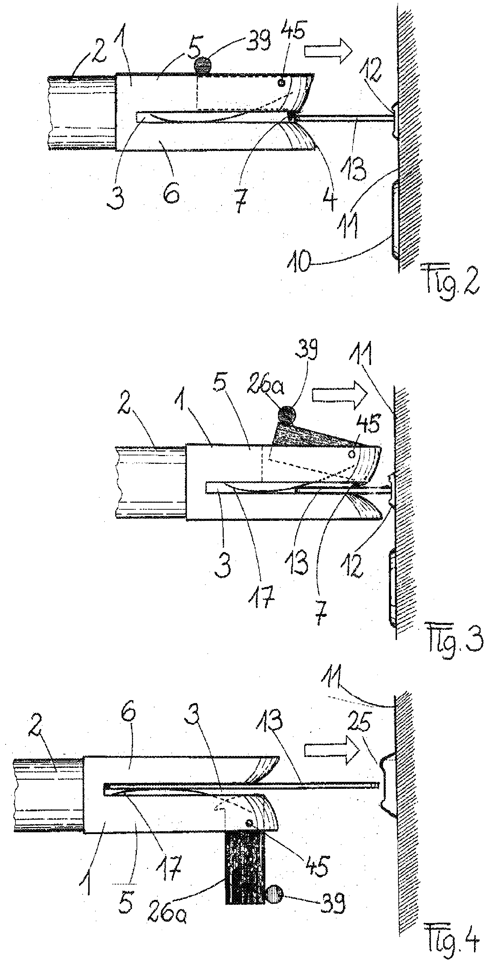

In der Darstellung gemäß Fig. 2 wird gezeigt, wie nach Betätigung der Anforderungstaste 10 eine im Ausgabeschlitz 12 des Automaten 11 bereitgestellte Parkkarte 13 mit dem Kopfteil 1 der Vorrichtung aufgenommen wird. Dabei wird das Kopfteil 1 an die Stirnseite der Parkkarte 13 herangeführt, wobei diese aufgrund der trichterförmigen Einführöffnung in den Schlitz 3 eingeführt wird. Die Stirnseite der Parkkarte 13 kommt dann zur Anlage an dem Halteelement 7.

Aus Fig. 3 wird ersichtlich, wie der weitere Aufsteckvorgang vor sich geht. Wird das Kopfteil 1 noch näher an den Automaten 11 herangeführt, bewirkt die in den Schlitz 3 eingeführte Parkkarte 13, dass das Halteelement 7 nach hinten in Richtung Griffstange 2 gedrückt wird. Dabei kippt der Klemmriegel 26a mit seinem hinteren, längeren Hebelarm um die exzentrischen Schwenkachse 45 nach oben. Beim anschließenden Herausziehen der Parkkarte 13 aus dem Automaten 11 fixiert der Klemmriegel 26a mit seinem Halteelement 7 durch Reibschluss die Parkkarte 13 im Kopfteil 1. Diese Haltekraft entsteht erst beim Ziehen der Parkkarte 13 aus dem Automaten 11. Die somit fest fixierte Parkkarte 13 kann sodann auf die in Fig. 1 beschriebene Weise problemlos aus dem Ausgabeschlitz 12 des Automaten 11 herausgezogen werden.

In Fig. 4 ist dargestellt, wie der umgekehrte Vorgang, nämlich das Wiedereinführen der Parkkarte 13 in einen Einführschlitz 25 des Automaten 11 vonstatten geht. Dazu wird die Vorrichtung um 180° um die Längsachse der Griffstange 2 gedreht, so dass die Deckplatte 5 nunmehr nach unten weist und sich das Basisteil 6 oben befindet. Dies hat den Effekt, dass die in den Schlitz 3 eingeführte Parkkarte 13 vom Klemmriegel 26a mit Halteelement 7 nicht mehr beaufschlagt wird, da dieser nach unten hängt. Der in den Schlitz 3 eingeführte Teil der Parkkarte 13 wird somit nur noch von der Blattfeder 17 beaufschlagt. Der dadurch ausgeübte Haltedruck reicht aus, um die Parkkarte 13 sicher an den Automaten 11 heranzuführen und in den zugeordneten Einführschlitz 25 einzuschieben. Durch den geringen Haltedruck ist zudem gewährleistet, dass die eingeführte Parkkarte 13 vom Einzugsmechanismus des Automaten 11 erfasst und auch problemlos eingezogen werden kann.

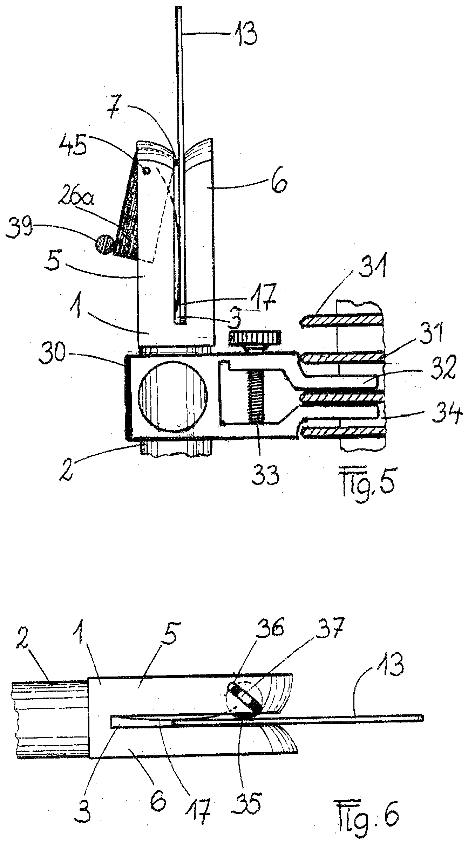

Fig. 5 zeigt, wie die erfindungsgemäße Vorrichtung im Fahrzeuginnern aufbewahrt werden kann. Hierzu ist eine spezielle Halterung 30 vorgesehen, die an einem am Armaturenbrett vorgesehenen Lüftungsgitter 31 angebracht wird. Dabei wird die Halterung 30 an einer der Lüftungslamellen 31 über eine Klammer 32 befestigt, die mittels einer Rändelschraube 33 geöffnet oder geschlossen werden kann. Die Griffstange 2 der Vorrichtung ist in einen Sitz der Halterung 30 eingeschoben.

In den Schlitz 3 des Kopfteils 1 ist eine Parkkarte 13 eingeführt, die von dem am Klemmriegel 26a angeordneten Ansatz 38 und von der Blattfeder 17 beaufschlagt wird. Die Vorrichtung erfüllt demnach auch die Funktion einer Halterung zum Aufbewahren der Parkkarte 13. Zum Entnehmen der Parkkarte 13 aus dem Kopfteil wird der Klemmriegel 26a über die im hinteren oberen Bereich angeordnete Noppe 39 angehoben, wodurch das Halteelement 7 von der Parkkarte 13 weggeschwenkt wird.

Bei der Variante gemäß Fig. 6 ist anstelle des Klemmriegels 26a als Halteelement 7 ein Gummizylinder 35 vorgesehen. Dieser weist an seinen Stirnseiten jeweils ein länglich gestaltetes Führungselement 37 auf. Diese Führungselemente 37 sind jeweils in einem zugeordneten Führungsschlitz 36 verschiebbar angeordnet. Dieser Führungsschlitz 36 verläuft schräg nach oben gerichtet, so dass beim Einführen der Parkkarte 13 in den Schlitz 3 des Kopfteils 1 der Gummizylinder 35 in diese Richtung zurückweicht und schräg nach oben geschoben wird. Dadurch lässt sich die Parkkarte 13 relativ leicht in den Schlitz 3 einschieben, während beim Herausziehen der Parkkarte 13 aus dem Schlitz 3 sich der Gummizylinder 35 mit der Parkkarte 13 verkeilt, wodurch erhöhte Haltekräfte auftreten.

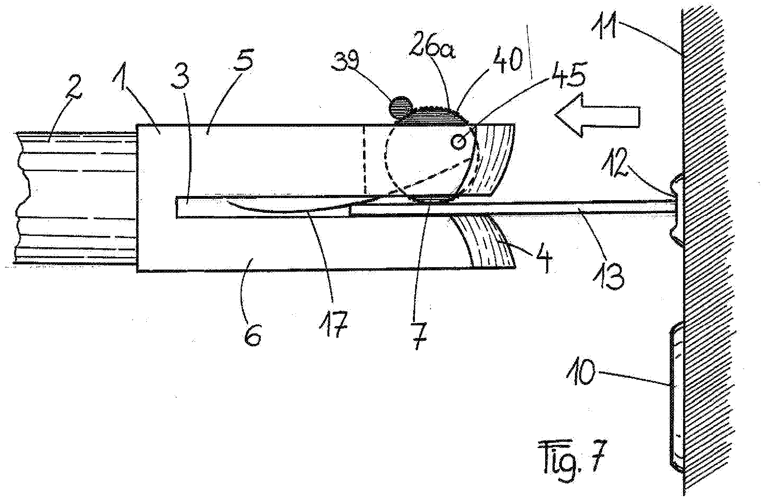

Fig. 7 zeigt eine weitere vorteilhafte Ausführung der erfindungsgemäßen Vorrichtung. Diese ist im Wesentlichen ähnlich wie die in den Fig. 1 bis Fig. 5 gezeigte Vorrichtung gestaltet. Der Klemmriegel 26a besteht hier aus einer Exzenterrolle 40 mit Exzenterachse 45. Sie ist auf ihrer Umfangseite mit reibungserhöhenden Rillen versehen. Die Darstellung zeigt den Entnahmevorgang der Parkkarte 13 aus dem Ausgabeschlitz 12 des Automaten 11. Dabei ist das freie Ende der Parkkarte 13 so weit in den Schlitz 3 des Kopfteils 1 eingeführt, bis sie mit ihrer Stirnseite an der Blattfeder 17 anstößt. Die Parkkarte 13 wird an ihrer Oberseite von dem Klemmriegel 26a beaufschlagt, der um die Exzenterachse 45 drehbar ist.

Aufgrund der Tatsache, dass sich die Exzenterrolle 40 bei der Zugbewegung mit der Oberseite der Parkkarte 13 verkeilt, wird der Anpressdruck derart erhöht, dass ein fester Reibschluss gewährleistet und ein Abrutschen des Kopfteils 1 von der Parkkarte 13 verhindert wird.

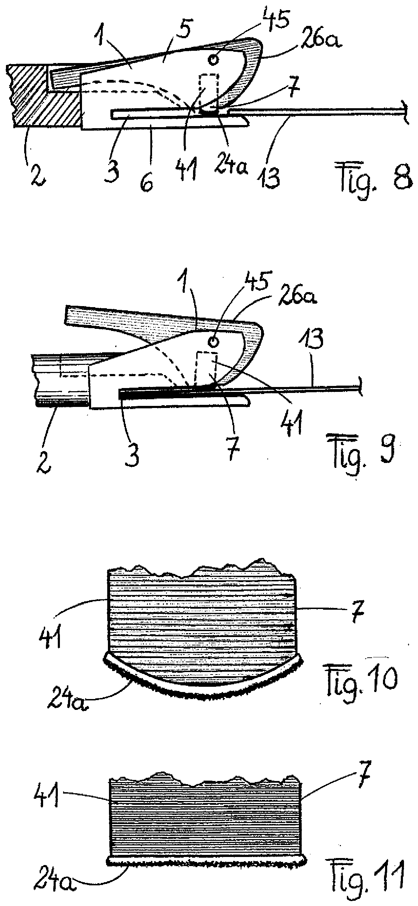

Bei der Ausführung gemäß Fig. 8 ist das im Klemmriegel 26a angeordnete Halteelement 7 im Bereich der Auflagefläche mit einer Reibfläche 24a versehen und als exzentrisch gelagerter Klemmriegel 26a mit der Schwenkachse 45 ausgebildet, in dessen unterem Teil ein Klemmeinsatz 41 angeordnet ist. Die Vorrichtung befindet sich in einer Stellung, in der eine Parkkarte 13 in den Schlitz 3 eingeschoben werden kann. Dabei ist der hintere, längere Hebelarm des Klemmriegels 26a nach unten geschwenkt, wobei das mit einer Reibfläche 24a versehene freie Ende des Klemmeinsatzes 41 auf der Oberseite des Basisteils 6 aufliegt.

In Fig. 9 ist dargestellt, in welcher Stellung sich der Klemmriegel 26a nach dem Einführen einer Parkkarte 13 in den Schlitz 3 des Kopfteils 1 befindet. Dieser weist in diesem Fall mit seinem hinteren, längeren Hebelarm schräg nach oben. Die Exzenteranordnung bewirkt, dass das Halteelement 7 fest gegen die Oberfläche der Parkkarte 13 gepresst wird, wodurch sich ein fester Reibschluss ergibt. Da die Parkkarte 13 in diesem Beispiel nur eine geringe Materialstärke aufweist und relativ dünn ist, wird der Klemmeinsatz 41 nur ein kleines Stück weit nach hinten geschwenkt. Beim Einführen einer dickeren Parkkarte 13 würde dieser noch weiter nach hinten und der hintere, freie Hebelarm des Klemmriegels 26a entsprechend weiter nach oben geschwenkt werden.

Fig. 10 zeigt eine Ausschnittvergrößerung des unteren Teils des Klemmeinsatzes 41, der hier abgerundet gestaltet ist und eine Reibfläche 24a aufweist. Diese kann beispielsweise aus einem aufgeklebten Stück Sandpapier bestehen, kann aber auch auf eine andere Weise so gestaltet sein, dass dadurch eine optimale Klemmwirkung gewährleistet ist. So kann der vorzugsweise aus Gummi bestehende Klemmeinsatz 41 entsprechend stark aufgeraut oder beschichtet sein.

Bei der Variante gemäß Fig. 11 ist der als Halteelement 7 ausgebildete Klemmeinsatz 41 an seiner Unterseite gerade gestaltet und weist wiederum eine Reibfläche 24a auf.

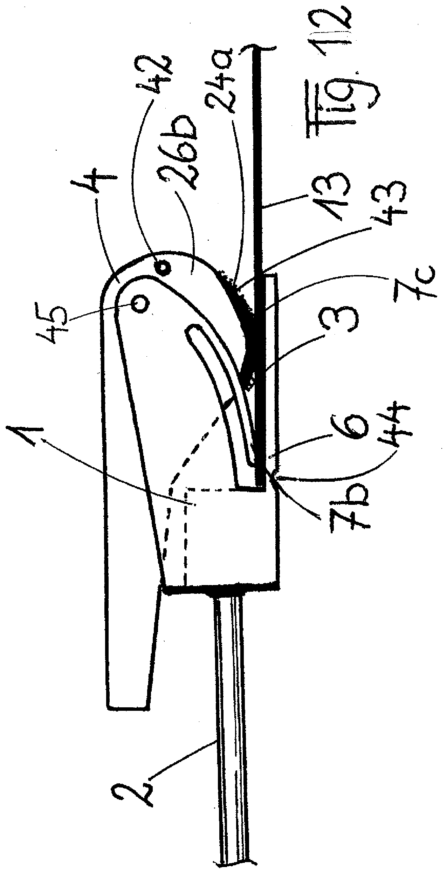

Die Ausführungsform gemäß Fig. 12 ist sehr einfach und zugleich recht praktikabel gestaltet. Die Zeichnung zeigt, wie eine in die Vorrichtung eingeführte Parkkarte 13 im Kopfteil 1 fixiert wird. Der Klemmriegel 26b ist ähnlich den bisherigen Vorrichtungen im Kopfteil 1 um die Exzenterachse 45 schwenkbar gelagert, wobei dessen vorderer unterer Teil auf der eingeführten Parkkarte 13 aufliegt und diese nach unten gegen das Basisteil 6 drückt. Das freie, in den Schlitz 3 der Vorrichtung eingeführte Ende der Parkkarte 13 wird auch bei dieser Ausführungsform durch ein im Kopfteil 1 angeordnetes, flexibles Element zusätzlich fixiert. Dieses besteht aus elastisch ausgebildeten Halteelementen 7b, die beidseits des Klemmriegels 26 b angeordnet sind. Zu diesem Zweck sind die beiden Seitenwangen, die den Klemmriegel 26b fixieren, mit einem schräg nach hinten und unten verlaufenden Längsschlitz versehen. Auf diese Weise bilden sich zwei dünne Stege, die mit ihrem freien Ende auf der Oberseite des Basisteils 6 aufliegen und somit ein federndes Element bilden.
Der Klemmriegel 26b ist an seiner Stirnseite abgerundet gestaltet und weist im vorderen Bereich einen den Schwenkradius begrenzenden Stopper 42 auf. Die Vorderkante des Klemmriegels 26b überragt das Basisteil 6 ein kleines Stück weit und dient somit auch als Drücker 4 zum Bedienen der Anforderungstaste 10 des Automaten.
Der untere, dem Basisteil 6 zugeordnete Bereich des Klemmriegels 26b weist eine die eingeführte Parkkarte 13 fixierende Reibfläche 24a auf. Hierzu ist auf dem betreffenden Bereich ein Reibbelag 43 aufgebracht.

Das Basisteil 6 hat im hinteren Teil, d.h. etwa auf Höhe des Schlitzendes, eine Materialverdünnung 44. Dadurch wird die Freigabe auch von dicken Parkkarten 13 durch das Kopfteil 1 beim Einführvorgang in den Parkautomaten insofern erleichtert, als das Basisteil 6 bei einem Zug an der Parkkarte 13 ein Stück weit nach unten wegklappen kann.

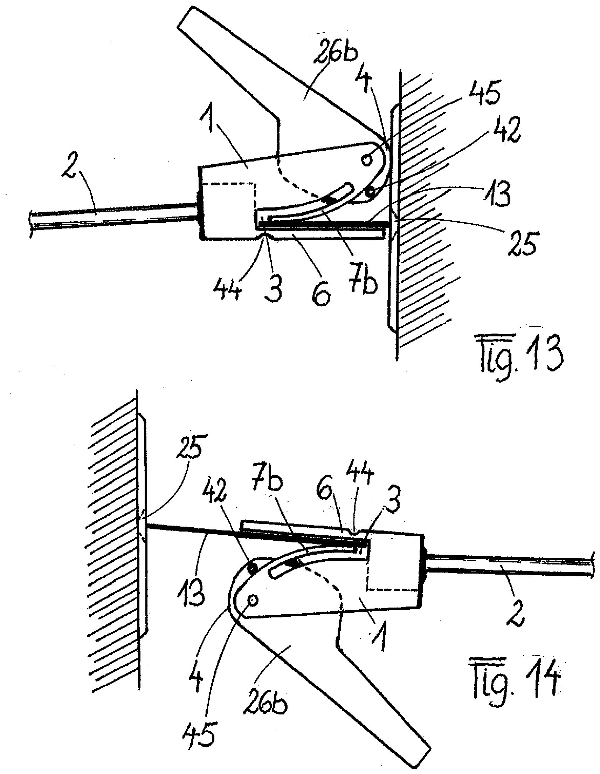

Fig. 13 macht den Einführvorgang der Parkkarte 13 in den Einführschlitz 25 des Automaten 11 deutlich. In diesem Fall ist die Parkkarte 13 bereits eingeführt, wobei sie vom Einzugsmechanismus bereits fast vollständig eingezogen wurde. Die Zeichnung macht deutlich, dass in diesem Moment der Klemmriegel 26b mit seiner Vorderkante zur Anlage an der Deckplatte des Einführschlitzes 25 kommt und der hintere Teil des Klemmriegels 26b nach oben geschwenkt wird. Dadurch wird auch der die Parkkarte 13 beaufschlagende Teil nach oben geschwenkt. Der Schwenkweg wird durch den Stopper 42 begrenzt. Die Parkkarte 13 wird somit nur mehr von den beiden beidseits des Klemmriegels 26b angeordneten Halteelementen 7b fixiert und kann vom Einzugsmechanismus des Automaten nach innen eingezogen werden.

Fig. 14 macht deutlich, dass bei dieser Ausgestaltung der Vorrichtung auch ein Einführvorgang der Parkkarte 13 in den Einführschlitz eines Automaten in der bisher beschriebenen Weise möglich ist. In diesem Fall ist die Vorrichtung um 180° gedreht, so dass der Klemmriegel 26b aufgrund der Gewichtskraft mit seinem längeren Hebelarm nach unten hängt. Der Schwenkweg wird abermals durch den Stopper 42, der am vorderen unteren Teil des Kopfteils 1 zur Anlage kommt, begrenzt. Die Parkkarte 13 wird demnach nicht mehr vom Klemmriegel 26b beaufschlagt, sondern nur noch vom Halteelement 7b fixiert. Die Parkkarte 13, die bereits ein Stück weit in den Einführschlitz 25 des Automaten hineinragt, kann somit vom Einziehmechanismus erfasst und problemlos aus dem Kopfteil 1 der Vorrichtung herausgezogen werden.

Die erfindungsgemäße Vorrichtung funktioniert wie folgt:
Zum Anfordern einer Parkkarte 13 wird die aus einem Kopfteil 1 mit Griffstange 2 bestehende Vorrichtung an die Anforderungstaste 10 des Automaten 11 herangeführt. Anschließend wird mit dem an der Stirnseite des Kopfteils 1 angeordneten Drücker 4 die Anforderungstaste 10 gedrückt.
Die daraufhin im Ausgabeschlitz 12 des Automaten 11 bereitgestellte Parkkarte 13 kann nun mit Hilfe der Vorrichtung entnommen werden. Dazu wird diese an das freie, den Ausgabeschlitz 12 des Automaten 11 überragende Ende der Parkkarte 13 herangeführt. Das Aufschieben des Kopfteils 1 auf die Parkkarte 13 wird insofern erleichtert, als der vordere, in Form einer trichterförmigen Einführhilfe gestaltete Teil des Kopfteils 1 lediglich zur Anlage mit der Parkkarte 13 gebracht werden muss, um dann anschließend die Vorrichtung noch ein Stück weiter nach vorne zu schieben. Das freie Ende der Parkkarte 13 wird dabei problemlos in den Schlitz 3 des Kopfteils 1 eingeführt, da dieser aufgrund einer ausreichenden Höhe auch dickere Parkkarten 13 aufnehmen kann. Auch bei dünnen Parkkarten 13 kann die Gefahr, dass diese beim Einführvorgang gestaucht werden, so gut wie ausgeschlossen werden. Die im Schlitz 3 des Kopfteils 1 angeordneten Halteelemente 7; 7a sind nämlich so gestaltet, dass sie beim Aufschieben auf die bereitgestellte Parkkarte 13 zurückweichen. Somit können Parkkarten 13 unterschiedlicher Stärke ohne nennenswerten Widerstand eingeführt werden. Dennoch reicht die auf eine in den Schlitz 3 eingeführte Parkkarte 13 einwirkende Haltekraft aus, um die Parkkarte 13 im Schlitz 3 sicher fixieren zu können.

Die Halteelemente 7; 7a sind so gestaltet, dass Parkkarten 13 unterschiedlicher Materialstärke mit nahezu identischer Haltekraft im Schlitz 3 festgehalten werden.

Bei den Ausführungsformen mit dem in der Deckplatte 5 angeordneten Klemmriegel 26a - gemäß den Fig. 1 bis 5 und den Fig. 8 bis 14 - bzw. dem Gummizylinder 35, der in einem schräg nach oben verlaufenden Führungsschlitz 36 angeordnet ist (vgl. Fig. 6) sowie der Exzenterrolle 40 ist je nach Verwendung der Vorrichtung als Entnahme- oder Wiedereinführhilfe für die Parkkarte 13 ein Wenden der Vorrichtung um 180° vorgesehen. Wird nämlich die Parkkarte 13 in der Entnahmestellung neben der beaufschlagenden Blattfeder 17 zusätzlich auch noch von dem Schwenkriegel 26a bzw. Gummizylinder 35 fixiert, ist eine sichere Entnahme aus dem Ausgabeschlitz 12 gewährleistet. In diesem Fall verkeilt sich der jeweilige Klemmriegel 26a bei Zug an der Parkkarte 13 selbsttätig, wobei die Parkkarte 13 derart druckbelastet wird, dass sie ohne Probleme aus dem Ausgabeschlitz 12 des Automaten 11 herausgezogen werden kann, auch wenn vom Ausgabemechanismus starke Haltekräfte auf sie einwirken.

Bei der bevorzugten Ausführungsform gemäß Fig. 12 und Fig. 13 erübrigt sich ein Wenden der Vorrichtung um 180°. In diesem Fall dient die Stirnseite des Klemmriegels 26b einerseits als Drücker 4 zum Betätigen der Anforderungstaste 10 des Automaten 11, und andererseits ist es auf Grund der besonderen Gestaltung möglich, diese beim Einführvorgang der Parkkarte 13 in den Einführschlitz 25 des Automaten 11 zur Anlage mit der Deckplatte des Einführschlitzes 25 zu bringen, wodurch der Klemmriegel 26b nach oben geschwenkt wird, wobei der Schwenkweg durch den Stopper 42 begrenzt wird. Dadurch wird die Beaufschlagung der Parkkarte 13 durch den Klemmriegel 26b aufgehoben.

Wird die Parkkarte in der lediglich von der Blattfeder 17 oder von den federnden Halteelementen 7b beaufschlagt, ist der Haltedruck innerhalb des Schlitzes 3 so gering, dass die Parkkarte 13 problemlos in den Automaten 11 wiedereingeführt werden kann.

Auch wenn die Einzugsrolle des Parkautomaten bereits abgenutzt bzw. stark zugeschliffen sein sollte, dürfte es demnach keine Probleme beim Erfassen und Einziehen der Parkkarte 13 in den Einführschlitz 25 geben.

Bei den Vorrichtungen gemäß Fig. 1 bis Fig. 6 und Fig. 8 bis 11 ist das beweglich angeordnete, als Klemmriegel 26a oder Exzenterrolle 40 (Fig. 7) ausgebildete Fixierelement so angeordnet, dass es in der oberen Stellung die in den Schlitz 3 eingeführte Parkkarte 13 beaufschlagt. Der dadurch auf die Parkkarte 13 ausgeübte Anpressdruck wird beim Herausziehen der Parkkarte 13 aus dem Ausgabeschlitz 12 des Automaten 11 erhöht, indem sich der beaufschlagende Teil des Fixierelements mit der Parkkarte 13 verkeilt. Auf diese Weise ist in jedem Fall gewährleistet, dass die Parkkarte 13 auch bei einer stärkeren Rückhaltekraft sicher aus dem Automaten 11 entnommen werden kann.

Der wesentliche Vorteil der erfindungsgemäßen Vorrichtungen liegt demnach darin, dass alle Ausführungsarten von sehr dünnen bis starken Parkkarten 13 aus dem Ausgabeschlitz 12 des Automaten 11 sicher entnommen werden können, da der vom jeweiligen Fixierelement auf die Parkkarte 13 ausgeübte Druck beim Zug an dieser verstärkt wird.

Nach der Entnahme wird die Vorrichtung mit der im Schlitz 3 festgehaltenen Parkkarte 13 ins Fahrzeuginnere geholt. Dabei besteht insbesondere im Freien die Gefahr, dass die Parkkarte 13 Wind oder Sturm aus dem Schlitz 3 des Kopfteils 1 gelöst werden könnte. Aus diesem Grund ist der im Kopfteil 1 angeordnete Haltemechanismus bei einigen Ausführungsformen so konzipiert, dass bei einer auf die Parkkarte 13 ausgeübten Zugbewegung die Haltekraft der Halteelemente 7 selbsttätig erhöht wird.

Bei der Ausfahrt aus der Parkgarage oder vom Parkplatz wird die Parkkarte 13 von Hand in den Schlitz 3 des Kopfteils 1 eingeschoben und anschließend mit Hilfe der Vorrichtung in den Einführschlitz 25 des Automaten 11 befördert. Die Haltekraft ist jedoch nur so stark, dass nach dem Einführen der Parkkarte 13 in den Einführschlitz 25 des Automaten 11 diese vom Einzugsmechanismus erfasst und eingezogen werden kann. Bei einem zu großen Widerstand bzw. bei einer zu starken Haltekraft der Haltevorrichtung im Kopfteil 1 würde die eingeführte Parkkarte 13 ansonsten wieder ausgeworfen werden.
So wird bei den Vorrichtungen gemäß Fig. 4 oder 14 das Kopfteil 1 um 180° gedreht, wobei der Klemmriegel 26a; 26b bzw. die Exzenterrolle 40 (Fig. 7) selbsttätig in eine Stellung gebracht wird, in der die Parkkarte 13 nicht beaufschlagt wird. Die Parkkarte 13 wird in diesem Fall lediglich von der als Halteelement 7 ausgebildeten Blattfeder 17 fixiert.

Bei der Vorrichtung gemäß Fig. 12 bis Fig. 14 sind bei Wiedereinführen der entwerteten Parkkarte 13 in den Automaten zwei Vorgehensweisen möglich:
So ist es möglich, nach dem Einstecken der Parkkarte 13 in den Schlitz 3 des Kopfteils 1 die Parkkarte 13 in den Einführschlitz 25 des Automaten so heranzuführen, dass sich der Klemmriegel 26b oben befindet. In dem Moment, da die Parkkarte 13 vom Einzugsmechanismus des Automaten erfasst wird, wird auch das Kopfteil 1 der Vorrichtung automatisch mitgezogen, so dass es zur Anlage mit dem Automaten gelangt. Aufgrund der besonderen Formgebung der Stirnseite des Klemmriegels 26b wird dieser dabei nach oben gekippt, wodurch die Parkkarte 13 freigegeben und vollständig eingezogen werden kann.

Bei der alternativen Methode (Fig. 4) wird die Parkkarte 13 mit einem um 180° gedrehten Kopfteil 1 eingeführt. In dieser Stellung befindet sich der Klemmriegel 26b an der Unterseite des Kopfteils 1, wobei der Hebelarm in der Regel nach unten hängt. Klemmt dieser jedoch, so wird der Einzugsvorgang dennoch nicht behindert, zumal - wie zuvor beschrieben - der Hebelarm des Klemmriegel 26b beim Kontakt mit dem Einführschlitz 25 des Automaten nach unten klappt und somit die Parkkarte 13 freigegeben wird.

Die Vorrichtung ist vorteilhafterweise so gestaltet, dass sie auch beim Einsatz von sehr dicken Parkkarten 13 oder bei unsachgemäßem Gebrauch nicht beschädigt oder zerstört wird. Zu diesem Zweck ist der Festhaltemechanismus elastisch gestaltet, was beispielsweise bei der Vorrichtung gemäß Fig. 12 bis Fig. 14 durch eine am Basisteil 6 angeordnete Materialverdünnung 44 erreicht wird.

Um die Vorrichtung im Fahrzeug stets griffbereit zur Hand zu haben, wird diese in eine am Lüftungsgitter 39 angebrachte Halterung 30 gesteckt (Fig. 5). Dabei rastet die Griffstange 2 in der zugeordneten Klammer 32 ein. Die Halterung 30 kann dann über ein Gelenk 33 in eine gewünschte Richtung, vorteilhafterweise senkrecht, geschwenkt werden. Der im Kopfteil 1 angeordnete Schlitz 3 dient nun zur Aufnahme der Parkkarte 13, die von den jeweiligen Halteelementen 7; 7a dort fixiert wird. Dies hat wiederum den zusätzlichen Vorteil, dass die Parkkarte 13 nicht versehentlich verlegt werden kann.

Zusammenfassend liegen die wesentlichen Vorteile der erfindungsgemäßen Vorrichtung darin, dass diese bei Parkkarten 13 unterschiedlicher Materialstärke zum Einsatz gebracht werden kann und mindestens zwei unterschiedliche Haltekräfte aufweist:
Eine verstärkte Haltekraft zum sicheren Herausziehen der Parkkarte 13 aus dem Automaten 11, eine geringe Widerstandskraft beim Einführen der Parkkarte in den Schlitz der Vorrichtung und eine geringe Haltekraft zum Wiedereinführen der Parkkarte 13 in den Automaten 11.
Außerdem ist die Vorrichtung so gestaltet, dass damit die Anforderungstaste 10 des Automaten 11 gedrückt werden kann.

### Bezugszeichenliste

- 1:: Kopfteil
- 2:: Griffstange
- 3:: Schlitz
- 4:: Drücker
- 5:: Deckplatte
- 6:: Basisteil
- 7; 7a; 7b; 7c:: Halteelement
- 10:: Anforderungstaste
- 11:: Automat
- 12:: Ausgabeschlitz
- 13:: Parkkarte
- 17:: Blattfeder
- 24; 24a:: Reibfläche
- 25:: Einführschlitz
- 26; 26a; 26b: Klemmriegel
- 30:: Halterung
- 31:: Lüftungslamellen
- 32:: Klammer
- 33:: Rändelschraube
- 34:: Lüftungsschlitz
- 35:: Gummizylinder
- 36:: Führungsschlitz
- 37:: Führungselement
- 39:: Noppe
- 40:: Exzenterrolle
- 41:: Klemmeinsatz
- 42:: Stopper
- 43:: Reibbelag
- 44:: Materialverdünnung
- 45:: Exzenterachse

## Patentansprüche

1. Vorrichtung zum Entnehmen und Wiedereinführen von Parkkarten (13) aus den bzw. in die dafür vorgesehenen Automaten (11) mit einem als Verlängerung ausgebildeten Griff (2) und einem die Parkkarte (13) aufnehmenden Kopfteil (1), das an seiner Stirnseite so ausgebildet ist, dass diese als Drücker (4) zum Betätigen einer Anforderungstaste (10) an dem Automaten (11) dient, und in dem ein Schlitz (3) mit Klemmorganen oder Halteelementen (7; 7a; 7b) ausgebildet ist, **dadurch gekennzeichnet, dass** diese jeweils so gestaltet sind, dass sie beim Aufnehmen der Parkkarte (13), beim Entnehmen der Parkkarte (13) aus dem Ausgabeschlitz (12) des Automaten (11) und beim Zurückgeben der Parkkarte (13) in den Einführschlitz (25) des Automaten (11) automatisch unterschiedliche Haltekräfte auf die Parkkarte (13) ausüben.

2. Vorrichtung nach Anspruch 1, **dadurch gekennzeichnet, dass** die vorzugsweise als Klemmriegel (26; 26a; 26b) ausgebildeten Halteelemente (7; 7a; 7b; 7c) so gestaltet und angeordnet sind, dass sie beim Einführen der Parkkarte (13) in den Schlitz (3) des Kopfteils (1) und bei der Entnahme aus dem Schlitz (3) nur eine minimale Druck- oder Klemmkraft auf die Parkkarte (13) ausüben.

3. Vorrichtung nach Anspruch 2, **dadurch gekennzeichnet, dass** die Halteelemente (7; 7a; 7b; 7c) als Blattfedern (17) ausgebildet sind.

4. Vorrichtung nach einem der vorhergehenden Ansprüche, **dadurch gekennzeichnet, dass** die vorzugsweise als Klemmriegel (26; 26a; 26b) ausgebildeten Halteelemente (7; 7a; 7b; 7c) so gestaltet und angeordnet sind, dass sie bei der Entnahme der Parkkarte (13) aus dem Ausgabeschlitz (12) des Automaten (11) die Parkkarte (13) im Schlitz (3) des Kopfteils (1) mit einer erhöhten Haltekraft fixieren, wobei ein zusätzlich flexibles Halteelement (7b) die Parkkarte (13) beaufschlagt.

5. Vorrichtung nach Anspruch 4, **dadurch gekennzeichnet, dass** der Klemmriegel (26; 26a; 26b) im Kopfteil (1) um eine Exzenterachse (45) frei schwenkbar gelagert ist.

6. Vorrichtung nach einem der Ansprüche 1 bis 5, **dadurch gekennzeichnet, dass** die vorzugsweise als Klemmriegel (26; 26a; 26b) ausgebildeten Halteelemente (7; 7a; 7b; 7c) so gestaltet sind, dass beim Wiedereinführen der Parkkarte (13) in den Einführschlitz (25) des Automaten (11) die Haltekraft aufgehoben wird.

7. Vorrichtung nach Anspruch 6, **dadurch gekennzeichnet, dass** die Haltekraft durch eine Halbdrehung um die Grifflängsachse aufgehoben wird.

8. Vorrichtung nach Anspruch 6, **dadurch gekennzeichnet, dass** die hohe Haltekraft des Klemmriegels (26b) bei der Kartenrückgabe in den Automaten (11) durch den Widerstand der Parkkarte (13) aufgehoben wird.

9. Vorrichtung nach einem der Ansprüche 6 bis 8, **dadurch gekennzeichnet, dass** das Aufheben der Haltekraft dadurch bewirkt wird, dass das als Klemmriegel (26b) ausgebildete Halteelement (7b) beim Kontakt mit dem Einführteil des Automaten (11) so nach oben gedrückt und dadurch geöffnet wird, dass der Kontakt zur Parkkarte (13) aufgehoben wird.

10. Vorrichtung nach einem der Ansprüche 1 bis 9, **dadurch gekennzeichnet, dass** der im Kopfteil (1) gelagerte Klemmriegel (26b) einen zur Begrenzung des Schwenkbereichs des Klemmriegels (26b) dienenden Stopper (42) aufweist.

11. Vorrichtung nach einem der Ansprüche 1 bis 10, **dadurch gekennzeichnet, dass** auf dem Klemmriegel (26b) ein Reibbelag (43) aufgebracht ist.

## Claims

1. Device for removing and reintroducing parking tickets (13) from and into corresponding automatic machines (11), comprising a handle (2) made up of a lengthening bar and a head piece (1) adapted to grip said parking ticket (13) and having a frontal face to be used as a pusher (4) for actuating a demand key (10) positioned in said machine (11), said head piece (1) having a slot (3) in which clamping or locking elements (7; 7a; 7b) are mounted, **characterized in that** said elements are configured such that they automatically exert different retaining forces acting on said parking ticket (13) depending on whether it should be gripped or removed from said delivering slot (12) of the machine (11) or reintroduced into the entrance slot (25) of the machine (11).

2. Device according to claim 1, wherein said locking elements (7; 7a; 7b; 7c) preferably made up of catching fingers (26; 26a; 26b) are conformed and positioned such that they exert only a small pressure or clamping force to the parking ticket (13), depending on whether it is introduced into the slot (3) of the head piece (1) or whether it is removed from said slot (3).

3. Device according to claim 2, wherein said locking elements (7; 7a; 7b; 7c) are plate springs (17).

4. Device according to any of the preceding claims, wherein the locking elements (7; 7a; 7b; 7c) preferably made up of catching fingers (26; 26a; 26b) are conformed and positioned such that they exert an elevated retaining force acting on said ticket (13) in the slot (3) of the head piece (1) when said ticket (13) is removed from the delivering slot (12) of the machine (11), wherein an additional flexible locking element (7b) is acting on the parking ticket (13).

5. Device according to claim 4, wherein said catching finger (26; 26a; 26b) is mounted in the head piece (1) such that it is free to rotate on an eccentric axis (45).

6. Device according to any of claims 1 to 5, wherein the locking elements (7; 7a; 7b; 7c) preferably made up of catching fingers (26; 26a; 26b) are configured such that the retaining force is neutralized when the parking ticket (13) is reintroduced into the entrance slot (25) of the machine (11).

7. Device according to claim 6, wherein the retaining force is neutralized by a rotation of 180° through the longitudinal axis of the handle (2).

8. Device according to claim 6, wherein the elevated retaining force of the catching finger (26b) is neutralized by the resistance of the parking ticket (13) when being reintroduced into the machine (11).

9. Device according to any of claims 6 to 8, wherein the retaining force is neutralized when the locking element (7b) made up of a catching finger (26b) contacting the introducing part of the machine (11) is pressed upwards and opened such that the contact to the parking ticket (13) is neutralized.

10. Device according to any of the preceding claims, wherein the catching finger (26b) mounted in the head piece (1) is provided with a stopper (42) adapted to limit the swivel range of said catching finger (26b).

11. Device according to any of the preceding claims, wherein the catching finger (26b) is coated with a friction lining (43).

## Revendications

1. Dispositif pour prélever des cartes de stationnement (13) et les réintroduire dans des compteurs automatiques de stationnement, comprenant un manche (2) rallongé par une tige avec une tête (1) apte à saisir la carte de stationnement (13), la face de la tête (1) étant formée de sorte qu'elle sert à être utilisée comme poussoir (4) pour actionner une touche de demande (10) sur le compteur automatique (11), la tête (1) présentant une fente (3) munie d'éléments de serrage ou de retenue (7; 7a ; 7b), **caractérisé par le fait que** lesdits éléments sont configurés de sorte qu'ils exécutent automatiquement sur la carte de stationnement (13) des forces différentes suivant qu'ils saisissent une carte (13), qu'ils prélèvent une carte (13) de la fente de distribution (12) dudit compteur (11) ou qu'ils ramènent la carte dans la fente d'entrée (25) du compteur (11).

2. Dispositif selon la revendication 1, **caractérisé par le fait que** les éléments de retenue (7 ; 7a ; 7b ; 7c), de préférence en forme de doigt de verrouillage (26 ; 26a ; 26b), sont configurés et positionnés de sorte qu'ils exercent une force de pression ou de serrage minimale sur la carte de stationnement (13) lorsqu'elle est introduite dans la fente (3) de la tête (1) et lorsqu'elle est prélevée de la fente (3).

3. Dispositif selon la revendication 2, **caractérisé par le fait que** les éléments de retenue (7 ; 7a ; 7b ; 7c) sont des ressorts à lames (17).

4. Dispositif selon une des revendications précédentes, **caractérisé par le fait que** les éléments de retenue (7 ; 7a ; 7b ; 7c) de préférence en forme de doigt de verrouillage (26 ; 26a ; 26c) sont configurés et positionnés de sorte qu'ils exercent une force de retenue élevée sur la carte de stationnement (13) lorsqu'elle est prélevée de la fente de distribution (12) du compteur automatique (11), un élément flexible de retenue additionnel (7b) agissant sur ladite carte (13).

5. Dispositif selon la revendication 4, **caractérisé par le fait que** le doigt (26 ; 26a ; 26b) intégré dans la tête (1) est librement pivotant sur un axe excentrique (45).

6. Dispositif selon une des revendications précédentes, **caractérisé par le fait que** les éléments de retenue (7 ; 7a ; 7b) de préférence en forme de doigt de verrouillage (26 ; 26a ; 26b) sont configurés de sorte que la force de retenue est supprimée lorsque la carte de stationnement (13) est réintroduite dans la fente d'entrée (25) dudit compteur (11).

7. Dispositif selon la revendication 6, **caractérisé par le fait que** la force de retenue est supprimée par une semi-rotation autour de l'axe longitudinal du manche (2).

8. Dispositif selon la revendication 6, **caractérisé par le fait que** la force élevée de retenue du doigt de verrouillage (26b) est supprimée par la résistance de la carte de stationnement (13) lorsqu'elle est réintroduite dans le compteur automatique (11).

9. Dispositif selon une des revendications 6 à 8, **caractérisé par le fait que** la force de retenue est supprimée **par le fait que** l'élément de retenue (7b) en forme de doigt de verrouillage (26b) en contactant la partie d'entrée du compteur (11) est poussé vers le haut et par conséquent ouvert, supprimant ainsi le contact avec la carte de stationnement (13).

10. Dispositif selon une des revendications 1 à 9, **caractérisé par le fait que** le doigt de verrouillage (26b) monté dans la tête (1) est muni d'un arrêt (42) pour limiter la course de pivotement du doigt de verrouillage (26b).

11. Dispositif selon une des revendications précédentes, **caractérisé par le fait qu'**une couche de friction (43) est appliquée sur le doigt de verrouillage (26b).
